Europäisches Patentamt

European Patent Office

Office européen des brevets

(11) Veröffentlichungsnummer: **0 369 980**
**A1**

## (12) EUROPÄISCHE PATENTANMELDUNG

(21) Anmeldenummer: 89890121.0

(51) Int. Cl.5: **B60R 19/54, B60J 11/00**

(22) Anmeldetag: 26.04.89

(30) Priorität: 17.11.88 AT 2825/88

(43) Veröffentlichungstag der Anmeldung:
23.05.90 Patentblatt 90/21

(84) Benannte Vertragsstaaten:
AT BE CH DE ES FR GB GR IT LI LU NL SE

(71) Anmelder: **Reiter, Klaus**
**Riednaunweg 13**
**A-6071 Aldrans/Tirol(AT)**

(72) Erfinder: **Reiter, Klaus**
**Riednaunweg 13**
**A-6071 Aldrans/Tirol(AT)**

(74) Vertreter: **Krause, Walter, Dr. Dipl.-Ing.**
**Postfach 200**
**A-1014 Wien(AT)**

(54) Einrichtung zum Schutz gegen Steinschlag für Automobile.

(57) Um Automobile gegen Steinschlag zu schützen ist vorgesehen, daß eine Schürze aus einem flexiblen Material, vorgesehen ist, die mittels eines in deren einem Randbereich angeordneten elastischen Bandes, z.B. eines Gummibandes, das mit zwei in die Radkästen (10) einhängbaren Haken (9) über die Motorhaube des Automobils spannbar ist und die eine Tasche (2) aufweist, in die die Motorhaube (3) mit derem einen Endbereich einsteckbar ist, wobei in dem in montierten Zustand hinteren Randbereich mindestens eine Strömungsleiteinrichtung (14), die eine im wesentlichen schräg nach hinten ansteigende Anströmfläche (14') aufweist, angeordnet ist.

Fig. 2

EP 0 369 980 A1

## Einrichtung zum Schutz gegen Steinschlag für Automobile

Die Erfindung bezieht sich auf eine Einrichtung zum Schutz gegen Steinschlag für Automobile.

Die Karosserie von Automobilen ist insbesondere im Bereich der Motorhaube von Schäden durch von der Fahrbahn aufgewirbelter Steine betroffen.

Ziel der Erfindung ist es eine Einrichtung vorzuschlagen, die auf einfache Weise einen Schutz dieser Karosseriebereiche ermöglicht.

Erfindungsgemäß wird dies dadurch erreicht, daß eine Schürze aus einem flexiblen Material, vorgesehen ist, die mittels eines in deren einem Randbereich angeordneten elastischen Bandes, z.B. eines Gummibandes , das mit zwei in die Radkästen einhängbaren Haken über die Motorhaube des Automobils spannbar ist und die eine Tasche aufweist, in die die Motorhaube mit derem einen Endbereich einsteckbar ist, wobei in dem im montierten Zustand hinteren Randbereich mindestens eine Strömungsleiteinrichtung (Spoiler), die eine im wesentlichen schräg nach hinten ansteigende Anströmfläche aufweist, angeordnet ist.

Durch diese Maßnahmen ist sichergestellt, daß die Schürze fest an der Karosserie anliegt und auch bei höheren Geschwindigkeiten keine Neigung zum Flattern zeigt. Letzteres wird im wesentlichen durch die Strömungsleiteinrichtung bewirkt, die für einen entsprechenden Strömungsabriß unmittelbar hinter der hinteren Kante der Strömungsleiteinrichtung sorgt. Gleichzeitig bewirkt diese Strömungsleiteinrichtung aber auch, daß die anströmende Luft zum größten Teil nach oben abgelenkt wird.

Dies führt dazu, daß die von der Fahrbahn aufgewirbelten Steinchen von dieser nach oben abgelenkten Luftströmung mitge rissen und über das Auto hinweg mitgenommen werden. Damit wird durch die vorgeschlagene Einrichtung nicht nur durch die teilweise Abdeckung der Karosserie diese geschützt, sondern auch durch eine entsprechende Änderung der Strömungsverhältnisse, die durch die Strömungsleiteinrichtung der Schürze bedingt ist, das Auftreffen von hochgewirbelten Steinchen auf der Karosserie und der Windschutzscheibe überhaupt sehr wesentlich vermindert.

Zum guten Sitz der Schürze trägt auch die Tasche bei, in die die Motorhaube einsteckbar ist. Damit wird in Verbindung mit den Haken, die an dem im Bereich der im montierten Zustand der Einrichtung hinteren Begrenzung angeordneten elastischen Band befestigt sind, ein sicherer Sitz der Einrichtung an der Karosserie erreicht.

Nach einem weiteren Merkmal der Erfindung kann vorgesehen sein, daß an der Tasche Gummibänder mit Haken befestigt sind, welche letztere in Verstrebungen der Motorhaube einhängbar sind. Auf diese Weise kann sehr einfach ein optimaler Sitz der Einrichtung an der Karosserie sichergestellt werden. Außerdem wird dadurch auch die Montage erleichtert.

Weiters kann vorgesehen sein, daß die Schürze zur Abdeckung der vorderen Seitenwandbereiche des Automobils seitliche Fortsätze aufweist, an denen gegebenenfalls elastische Bänder befestigt sind, die unter die Stoßstange einhängbar sind. Auf diese Weise ist auch eine Schutz der vorderen Seitenwandbereiche der Karosserie erreichbar. Außerdem wird durch die oben erwähnten Maßnahmen auch eine sehr sichere Befestigung der Einrichtung an der Karosserie erzielt.

Nach einem weiteren Merkmal der Erfindung kann vorgesehen sein, daß die Schürze aus einem flexiblen, wasser-, kälte- und hitzebeständigen und vorzugsweise gegen Mineralstoffe, insbesondere Streusalz, beständigen, Kunststoff, der schwer entflammbar ist, hergestellt und vorzugsweise an der auf der Karosserie aufliegenden Innenseite mit einem weichen Filz beschichtet ist. Ein solches Material, das vorzugsweise aus ver schiedenen Schichten besteht, ist im Handel unter der Bezeichnung "Skai" erhältlich.

Damit wird sichergestellt, daß die Schürze auch bei winterlichen Temperaturen nicht zum Brechen neigt und geschmeidig bleibt. Weiters wird durch diese Maßnahmen auch sichergestellt, daß eine Beschädigung der Lackierung durch geringfügige Relativbewegungen der Schürze gegenüber der Karosserie vermieden wird.

Nach einem weiteren Merkmal der Erfindung kann vorgesehen sein, daß die mit dem elastischen Band verbundenen, in die Radkästen einhängbaren Haken vorzugsweise aus Aluminium hergestellt und mit weichem Kunststoff überzogen sind.

Durch diese Maßnahmen ist es möglich die Haken an die Form der Randbereiche der Radkästen durch entsprechendes Biegen der Haken anzupassen.

Die Erfindung wird nun anhand der Zeichnungen näher erläutert. Dabei zeigen:

Fig. 1 schematisch einen Schnitt nach der Linie I-I in

Fig. 2 durch eine mit einer erfindungsgemäßen Einrichtung versehenen Motorhaube,

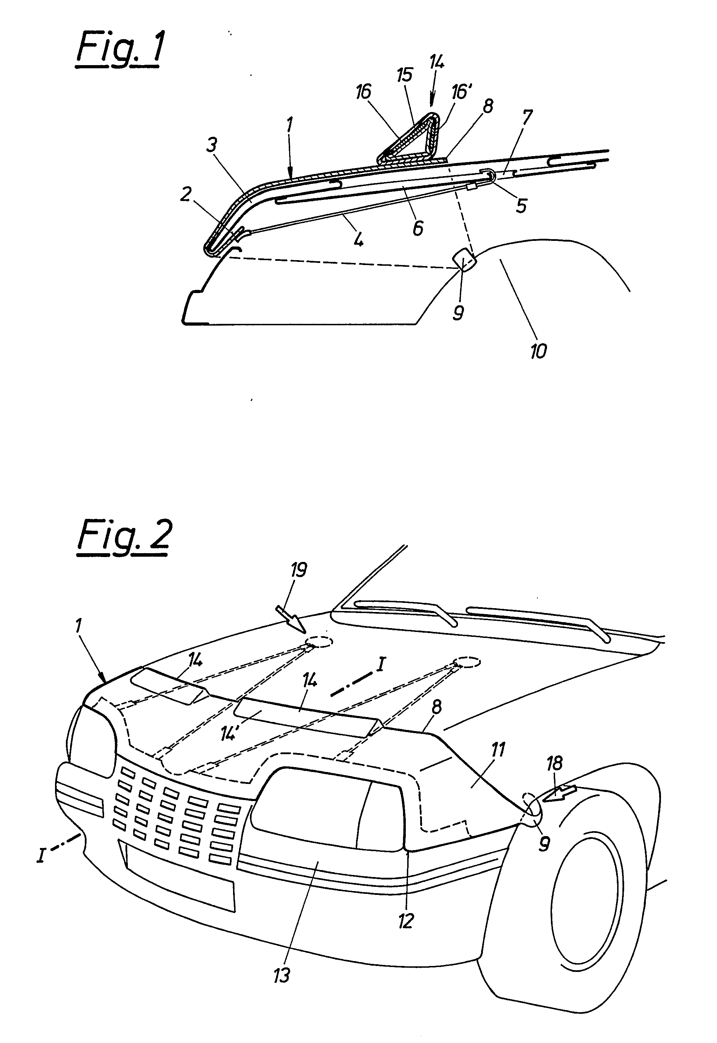

Fig. 2 schematisch eine axonometrische Darstellung eines Autos mit einer erfindungsgemäßen Einrichtung,

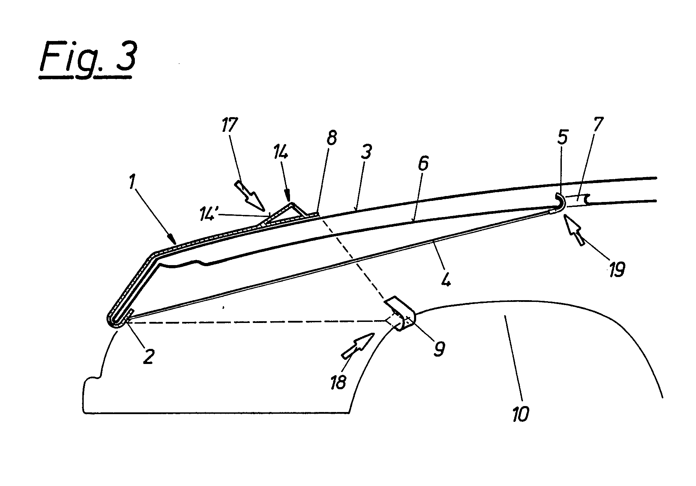

Fig. 3 eine andere Ausführung im Schnitt entsprechend Fig. 1.

Wie aus den Zeichnungen zu ersehen ist, besteht die erfindungsgemäße Einrichtung im wesentlichen aus einer Schürze 1 aus einem kältebeständigen und nicht entflammbaren flexiblen Kunststoff. Diese Schürze 1 weist eine Tasche 2 auf, in die die Motorhaube 3 eingesteckt ist.

An dem Innenteil der Tasche 2 sind Gummibänder 4 befestigt, an deren freien Enden Haken 5 angeordnet sind. Diese sind in Ausnehmungen 7 der Verstrebung 6 der Motorhaube 3 in Richtung des Pfeiles 19 eingehängt um die Schürze 1 über die Motorhaube zu spannen.

Die Tasche 2 erstreckt sich über die gesamte Breite der Vorderkante der Motorhaube 3.

Zur weiteren Befestigung der Schürze 1 ist im Bereich deren Hinterkante 8 ein Gummiband eingenäht, an dessen beiden Enden Haken 9 befestigt sind, die in die Radkästen 10 in Richtung des Pfeiles des Automobils eingehängt werden. Diese Haken 9 sind aus Aluminium hergestellt und mit einem weichen Kunststoff überzogen. Dies ermöglicht eine Anpassung der Haken 9 an die Gestaltung der Ränder der Radkästen 10, die einfach durch Biegen erfolgen kann.

Durch das Spannen des im Bereich der Hinterkante 8 der Schürze 1 eingearbeiteten Gummibandes durch das Einhängen der Haken 9 wird die Schürze 1 fest in Kontakt mit der Motorhaube 3 gehalten.

Zum Schutz des vorderen Bereiches der Seitenwände des Fahrzeuges weist die Schürze 1 Seitenteile 11 auf. Dabei kann im Bereich der vorderen Ecke 12 eines jeden Seitenteiles 11 ein Band, insbesondere ein Gummiband befestigt sein. Dies ermöglicht das Einfädeln der Stoßstange zwischen diesem Band und der übrigen Schürze 1, wodurch auch die Seitenteile 11 an die Karosserie angepreßt werden können.

Um ein Flattern der Hinterkante 8 der Schürze 1 bei höheren Geschwindigkeiten zu vermeiden und gleichzeitig aufgewirbelte Steine möglichst über das Fahrzeug hinwegzuleiten, sind im hinteren Bereich der Schürze 1 Strömungsleiteinrichtungen 14 (Spoiler) angeordnet. Diese sind im Querschnitt im wesentlichen dreieckig ausgebildet. Dabei sind in eine Schlaufe 15 aus einem flexiblen Kunststoff zwei Streifen 16, 16′ aus einem festen Material, z.B. Aluminium oder ein im wesentlichen starrer, kältebeständiger Kunststoff, z.B. ein solcher wie er für Ski-Gleitbeläge verwendet wird, eingenäht.

Diese Strömungsleiteinrichtungen 14 bewirken bei höheren Anströmgeschwindigkeiten an der Anströmfläche 14′ ein festes Anpressen der Schürze 1 in Richtung des Pfeiles 17 und verhindert dadurch ein "Flattern" derselben. Außerdem wird dadurch auch die Stömung über das Fahrzeug beeinflußt, wodurch allenfalls hochgeschleuderte Steinchen nach oben abgelenkt werden und von der über das Fahrzeug hinwegstreichenden Luftströmung mitgerissen werden.

## Ansprüche

1. Einrichtung zum Schutz gegen Steinschlag für Automobile, dadurch gekennzeichnet, daß eine Schürze aus einem flexiblen Material, vorgesehen ist, die mittels eines in deren einem Randbereich angeordneten elastischen Bandes, z.B. eines Gummibandes, das mit zwei in die Radkästen (10) einhängbaren Haken (9) über die Motorhaube des Automobils spannbar ist und die eine Tasche (2) aufweist, in die die Motorhaube (3) mit derem einen Endbereich einsteckbar ist, wobei in dem im montierten Zustand hinteren Randbereich mindestens eine Strömungsleiteinrichtung (Spoiler) (14), die eine im wesentlichen schräg nach hinten ansteigende Anströmfläche aufweist, angeordnet ist.

2. Einrichtung nach Anspruch 1, dadurch gekennzeichnet, daß an der Tasche (2) Gummibänder (4) mit Haken (5) befestigt sind, welche letztere in Verstrebungen der Motorhaube (3) einhängbar sind.

3. Einrichtung nach Anspruch 1 oder 2, dadurch gekennzeichnet, daß die Schürze (1) zur Abdeckung der vorderen Seitenwandbereiche des Automobils seitliche Fortsätze (11) aufweist, an denen gegebenenfalls elastische Bänder befestigt sind, die unter die Stoßstange (13) einhängbar sind.

4. Einrichtung nach einem der Ansprüche 1 bis 3, dadurch gekennzeichnet, daß die Schürze (1) aus einem flexiblen, wasser-, kälte- und hitzebeständigen und vorzugsweise gegen Mineralstoffe, insbesondere Streusalz, beständigen, Kunststoff, der schwer entflammbar ist, hergestellt und vorzugsweise an der auf der Karosserie aufliegenden Innenseite mit einem weichen Filz beschichtet ist.

5. Einrichtung nach einem der Ansprüche 1 bis 4, dadurch gekennzeichnet, daß die mit dem elastischen Band verbundenen, in die Radkästen (10) einhängbaren Haken (9) vorzugsweise aus Aluminium hergestellt und mit weichem Kunststoff überzogen sind.

_Fig.1_

_Fig.2_

_Fig. 3_

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-1 559 458 (M. B. RIZIANU) <br> * Seite 1, Zeilen 77-96 * <br> --- | 1,3 | B 60 R 19/54 <br> B 60 J 11/00 |
| A | FR-A-1 564 532 (R. SCHEERS et al.) <br> * Anspruch 1 * <br> --- | 1 | |
| A | US-A-4 041 999 (R.E. MILLER) <br> * Spalte 2, Zeile 43 - Spalte 3, Zeile 6; Anspruch 1 * <br> --- | 1,4,5 | |
| A | US-A-4 589 459 (L.J. LANTRIP) <br> * Spalte 5, Zeilen 53-60; Spalte 6, Zeilen 41-47 * <br> --- | 1,3 | |
| A | FR-A-2 070 785 (SPIROS KOKONIS) <br> * Seite 2, Zeilen 23-28 * <br> --- | 2,3 | |
| P,A | US-A-4 799 728 (C. AKERS et al.) <br> * Spalte 2, Zeilen 37-64 * <br> --- | 1,5 | |
| A | US-A-2 793 705 (R.K. GARRITY) <br> * Spalte 2, Zeile 55 - Spalte 3, Zeile 20 * <br> --- | 1,3,4 | **RECHERCHIERTE SACHGEBIETE (Int. Cl.5)** <br><br> B 60 J <br> B 60 R <br> B 62 D |
| A | US-A-4 635 996 (T. HIROSE) <br> * Spalte 3, Zeilen 37-55 * <br> --- | 1,4 | |
| A | US-A-3 695 674 (W.W. BAKER) <br> * Spalte 1, Zeilen 4-7 * <br> --- | 1 | |
| A | US-A-4 262 954 (M. H. THOMPSON) <br> * Spalte 3, Zeilen 27-39 * <br> --- | 1 | |
| A | US-A-2 048 461 (J.H. MOSGOFFIAN) <br> * Seite 3, Spalte 1, Zeilen 7-12 * <br> --- -/- | 1 | |

Der vorliegende Recherchenbericht wurde für alle Patentansprüche erstellt

| Recherchenort | Abschlußdatum der Recherche | Prüfer |
|---|---|---|
| BERLIN | 08-02-1990 | STANDRING M A |

**Europäisches Patentamt**

## EUROPÄISCHER RECHERCHENBERICHT

Nummer der Anmeldung

EP 89 89 0121

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-1 584 518 (W.F. DRAKE)<br>* ganzes Dokument *<br>----- | 1 | |

**RECHERCHIERTE SACHGEBIETE (Int. Cl.5)**

Der vorliegende Recherchenbericht wurde für alle Patentansprüche erstellt

| Recherchenort | Abschlußdatum der Recherche | Prüfer |
|---|---|---|
| BERLIN | 08-02-1990 | STANDRING M A |